# EUROPEAN PATENT SPECIFICATION

(11) **EP 3 435 445 B1**
(45) Date of publication and mention of the grant of the patent: **27.04.2022**
(21) Application number: 17182898.1
(22) Date of filing: 25.07.2017
(51) Int. Cl.: H01M 50/579, H01M 10/42, H01M 10/0525, H01H 35/14

(54) **TRIGGER DEVICE, SAFETY APPARATUS, ELECTRIC ENERGY STORE DEVICE AND METHOD FOR TRIGGERING A SAFETY DEVICE FOR AN ELECTRIC ENERGY STORE UNIT**
AUSLÖSERVORRICHTUNG, SICHERHEITSVORRICHTUNG, STROMSPEICHERVORRICHTUNG UND VERFAHREN ZUR AUSLÖSUNG EINER SICHERHEITSVORRICHTUNG FÜR EINE STROMSPEICHEREINHEIT
DISPOSITIF DE DÉCLENCHEMENT, APPAREIL DE SÉCURITÉ, DISPOSITIF DE STOCKAGE D'ÉNERGIE ÉLECTRIQUE ET PROCÉDÉ POUR DÉCLENCHER UN DISPOSITIF DE SÉCURITÉ POUR UNE UNITÉ DE STOCKAGE D'ÉNERGIE ÉLECTRIQUE

(43) Date of publication of application: 30.01.2019
(73) Proprietor: Robert Bosch GmbH, 70442 Stuttgart (DE); GS Yuasa International Ltd., Kyoto-shi, Kyoto 601-8520 (JP)
(72) Inventor: Doering, Valentin, 76227 Karlsruhe (DE)
(74) Representative: Isarpatent

(56) References cited:
- WO-A1-87/01663
- JP-A- 2016 072 011
- US-A- 3 793 498
- US-A1- 2014 062 410
- US-B2- 6 906 436
- ZHANG ZHIGUO ET AL: "Research on the Crash Test's Safety in NCAP of Electrical Vehicle", 2017 9TH INTERNATIONAL CONFERENCE ON MEASURING TECHNOLOGY AND MECHATRONICS AUTOMATION (ICMTMA), IEEE, 14 January 2017 (2017-01-14), pages 310-315, XP033050323, DOI: 10.1109/ICMTMA.2017.0081 [retrieved on 2017-01-24]

## Description

The present invention relates to a safety apparatus for protecting an electric energy store unit, an electric energy store device with an electric energy store unit and a corresponding method for triggering safety measures concerning an electric energy store unit.

### State of the art

The electric energy store unit especially is a battery unit, preferably a rechargeable battery unit. Corresponding batteries for electric vehicles (EV: Electrical Vehicles) as well as for vehicles with hybrid (HEV: Hybrid Electrical Vehicles) and plugin hybrid drive (PHEV: Plugin Hybrid Electrical Vehicles) of lithium ion ("Li ion") technology (LIT: Lithium Ion Technology) are in general structured hierarchically. The smallest units are cells. Several of these cells are assembled into a module, from which the batteries are built up.

Battery units for electrochemical storage frequently contain aggressive substances which, when set free, may lead to the endangerment of persons and objects. In some energy store units, for instance lithium ion (Li ion) battery units, there is the additional danger of fire and/or explosion, since the battery unit contains easily oxidizable materials (e.g. electrolyte) and strong oxidizers (e.g. cathode material). As a result, known batteries and capacitors are constructed in such a way that they are able to withstand the mechanical stresses that are to be expected, without a jacket of the battery being injured, so that transition of the dangerous substances into the surroundings of the energy store is prevented.

In spite of this, damage to the jacket is never quite to be excluded. In the field of motor vehicles, for example, in which a battery may be used for supplying the vehicle electrical system or for driving something, in case of an accident, even a well secured battery may be greatly deformed and may burst open. The ignition of the exiting electrolyte may take place during the deformation or later, quite possibly even after several seconds or minutes.

Zhang Zhiguo et al. ("Research on the Crash Test's Safety in NCAP of Electrical Vehicle", 2017 9th International Conference on Measuring Technology and Mechatronics Automation (ICMTMA), IEEE, 14 January 2017, pp. 310-315) describes the safety of electrical vehicle in crash test compared with gasoline vehicle, regarding the crash standard of electrical vehicle and the crash test's process.

Document WO 87/01663 A1 describes an electrical isolator for a vehicle comprises contacts for connecting the live terminal of the vehicle battery to an output for supplying the vehicle systems, and at least one sensor responsive to an impact of the vehicle to trigger the isolator and open contacts, but further to close contacts which serve to connect the output to ground.

Document US 3 793 498 A describes a mechanical pressure switch device which serves not only as a support mechanism for a bumper of a motor vehicle but as a combination impact detector and switch which is actuated in response to a frontal or rear-end collision encountered by the motor vehicle, comprising in one preferred form a cylinder, a piston axially slidable in the cylinder bore and dividing the cylinder bore into two chambers which are in communication with each other through an orifice formed in the piston, pressure absorptive means such as liquid filling the chambers in the cylinder, and switch means which is actuated in response to the axial movement of the plunger relative to the cylinder through a predetermined distance.

Document US 6 906 436 B2 describes a system including a thin-film battery and an activity-activated switch, wherein the system is placed on a substrate with an adhesive backing.

Document US 2014/062410 A1 describes an electrochemical energy storage cell having an electrode assembly, containing at least one first electrode of a first polarity and at least one second electrode of a second polarity, a film-like casing, which at least partially encloses the electrode assembly; and at least one first current-conducting device, which is connected to at least one first electrode of the electrode assembly in an electrically conductive manner and projects out of the casing at least partially, and at least one second current-conducting device, which is connected to at least one second electrode of the electrode assembly in an electronically conductive manner and projects out of the casing at least partially. Document JP 2010 183 803 A1 describes a safety apparatus with a safety device being a discharge device for discharging an electric energy store unit in the event of an external mechanical impact on said electric energy store unit and a trigger device for triggering said discharge device. The trigger device comprises a plate-like trigger element for covering at least a part of the surface of the electric energy store unit, two contact elements mounted on the electric energy store unit and a short circuit clasp coupled to the plate-like trigger element, wherein the short circuit clasp establishes an electrically conducting path electrically connecting two counter contact elements. Each of the documents US 5,818,122 A and JP H09284904 A shows a safety apparatus of a quite similar type.

Document JP 2016 072011 A teaches a safety apparatus for protecting an electric energy store including detection device for detecting decreased electrical resistance due external force; mounted, inside a pack, to an outer surface of the store units; a monitoring circuit and safety device responsive thereto; whereby the detection device comprising plate-like contact elements spaced by a insulators, whereby the resistance is decreased by one of the plates being deformed by the force and contacting the other plate.

### Disclosure of the invention

The present invention provides a safety apparatus for protecting an electric energy store unit with the features of claim 1, which safety apparatus has the advantage that the corresponding safety measure can be performed quickly.

The electric energy store unit especially may be a battery unit, preferably a rechargeable battery unit (also known as secondary cell, or accumulator).

In contrast to the device described in the above mentioned document JP 2010 183 803 A1 only one counter contact element needs to contact one contact element to generate the trigger signal, which makes the trigger device according to the invention much faster and more reliable.

In general, the trigger device can trigger different kinds of safety devices for different kinds of protection and/or warning mechanisms. According to a preferred embodiment of the invention the safety device may be a discharge device for discharging of the electric energy store unit.

The intermediate element decouples the plate-like trigger element mechanically from the electric energy store unit.

Preferably, the deformable intermediate element or at least one of the deformable intermediate elements may be a pressure spring or may comprise a pressure spring.

According to a further embodiment of the invention, the deformable intermediate element or at least one of the deformable intermediate elements may be forming the counter contact element or at least one of the counter contact elements. At least one contact part of said counter contact element built by the deformable intermediate element may be located between the plate-like trigger element and the corresponding contact element.

Preferably, the at least one deformable intermediate element, which is forming the counter contact element or one of the counter contact elements, may reach to the outer surface of the electric energy store unit. Thus this counter contact element can electrically be connected on the outer surface of the electric energy store unit.

The safety device especially may be a discharge device to discharge said electric energy store unit in response to a trigger signal of the trigger device.

The present invention further provides an electric energy store device with the features of claim 6. The electric energy store unit may be a battery unit.

According to an embodiment of the invention, the unit may be a Li-Ion battery unit with at least one Li-Ion battery element, especially a Li-Ion battery cell.

The battery element/battery cell may be formed, inter alia, as a so-called jelly roll or wound type cell, respectively, or it may have a stacked arrangement, for example.

The present invention finally provides a method for taking safety measures of a safety device for protecting an electric energy store unit with the features of claim 9.

With regard to further technical features and advantages of the trigger device, safety apparatus, battery device and method for triggering a discharge of an electric energy store unit as described above, it is referred to the figures and the description of the figures.

### Figures

Further advantages and embodiments of the subject-matters as described herein are described in the figures and the following description of the figures, wherein the features described may be part of the invention alone or in any combination, insofar it is not excluded due to the description or the context. It has to be noted that the figures are of illustrative purpose, only, and are not meant to restrict the present subject-matters.
- Fig. 1: shows a schematic view of an electric energy unit and a safety apparatus with a trigger device according to an embodiment of the invention;
- Fig. 2: shows a schematic view of an electric energy unit and a safety apparatus with a trigger device according to an embodiment of the invention; and
- Fig. 3: shows a schematic view of an electric energy unit and a safety apparatus with a trigger device according to an embodiment of the invention.

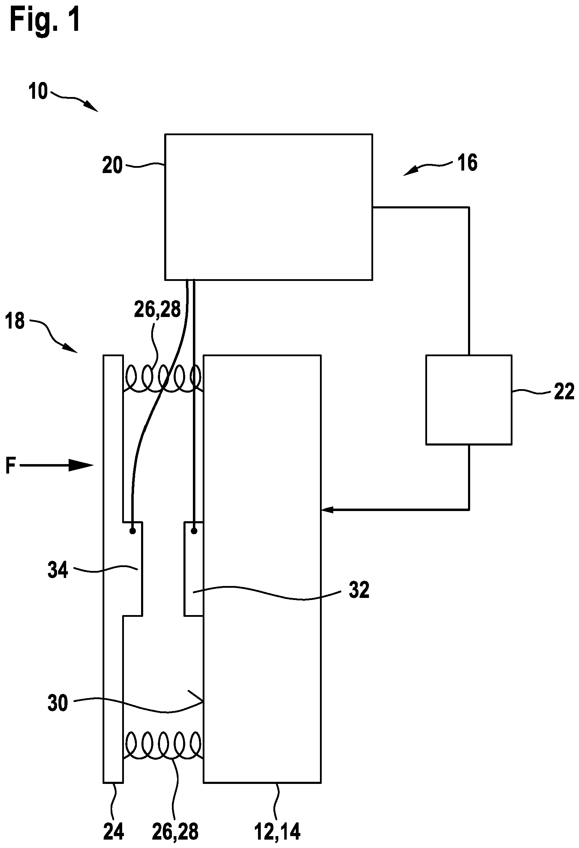

In figure 1, the schematic construction of an electric energy store device 10 is shown. The electric energy store device 10 comprises an electric energy store unit 12, which is a battery unit 14 in the shown example, and a safety apparatus 16 for protecting said electric energy store unit 12. The safety apparatus 16 comprises a trigger device 18, a monitoring circuitry 20, and a discharge device 22 for a controlled discharging of the electric energy store unit 12. The monitoring circuitry 20 can be defined as a component of the trigger device 18 or as a component of the safety apparatus outside the trigger device 18. The discharge device 22 is a kind of safety device, wherein the discharging of the electric energy store unit 12 is the corresponding safety measure of said safety device. The trigger device 18 is set up for triggering the discharge device 22 in the event of an external mechanical impact on said electric energy store unit 12 or that electric energy store device 10 as a whole respectively. The battery unit 14 especially is a battery unit 14 for a traction battery for a vehicle with electric drive, hybrid drive or plug-in hybrid drive.

The trigger device 18 on its part comprises a plate-like trigger element 24 mounted by means of two or more deformable intermediate elements 26 on the outer surface 30 of the electric energy store unit 12.The deformable intermediate elements 26 are spring elements 28 formed as pressure springs. At the same time the plate-like trigger element 24 covers a part of the outer surface 30 of the electric energy store unit 12. The trigger device 18 further comprises a contact element 32 mounted on the outer surface 30 of the electric energy store unit 12 and a corresponding counter contact element 34 mounted on the plate-like trigger element 24 directed towards the contact element 32.

Both elements (contact element 32 and counter contact element 34) are located opposite each other, wherein the counter contact element 34 can move in relation to the fixed contact element 32 because it is mounted on the movably mounted plate-like trigger element 24. The trigger device 18 therefore is a kind of switch, with its contact elements 32, 34 connected to the monitoring circuitry 20 by use of two electrical lines. The monitoring circuitry 20 controls the discharge device 22 depending on the switching state of the switch-like trigger device 18.

By this set-up the contact and counter contact elements 32, 34 are electrically interconnected in such way that a deformation and/or fracture and/or shift of the plate like trigger element 24 caused by a force F of the external mechanical impact acting on said plate-like trigger element 24 will generate a trigger signal by establishing an electric contact between the contact element 32 and the counter contact element.

The discharge device 22 is set up to discharge the electric energy store unit 12 in response to the trigger signal of the trigger device 18, namely the electric contact of the contact and counter contact elements 32, 34 monitored/detected by the monitoring circuitry 20.

This gives the following function: a deformation, fracture and/or shift of the plate-like trigger element 24 caused by the force F of the external mechanical impact acting on said plate-like trigger element 24 establishes an electric contact between the contact element 32 and the counter contact element 34. The monitoring circuitry 20 will detect the electrical contact or a circuit close caused by this contact, which will trigger the discharge of the electric energy store unit 12 by means of the discharge device 22. In other words, the monitoring circuitry 20 detects the electrical resistance between the contact elements 32, 34.

The further figures show alternative embodiments of the electric energy store device 10 with different designs of the trigger device 18. In the following the differences between the trigger devices 18 will be discussed:

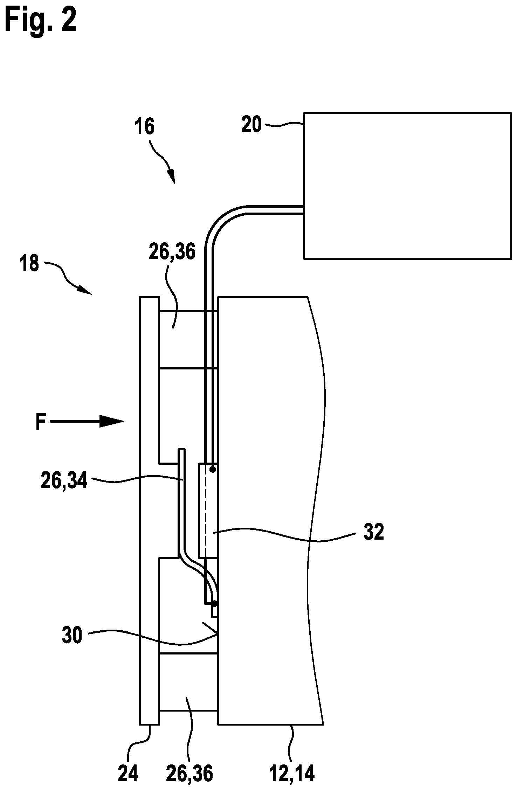

Figure 2 shows a second embodiment of the trigger device 18 together with the corresponding electric energy store unit 12. Some of the deformable intermediate elements 26 of the trigger device 18 shown in figure 2 are more massive elements made of deformable material. Another deformable intermediate element 26 is a spring-like element forming the counter contact element 34. This spring-like element 26 reaches from the part forming the counter contact element 34 at the plate-like trigger element 24 to the outer surface 30 of the electric energy store unit 12. The counter contact element 34 is electrically connected to the corresponding electrical line on the outer surface 30 of the electric energy store unit 12.

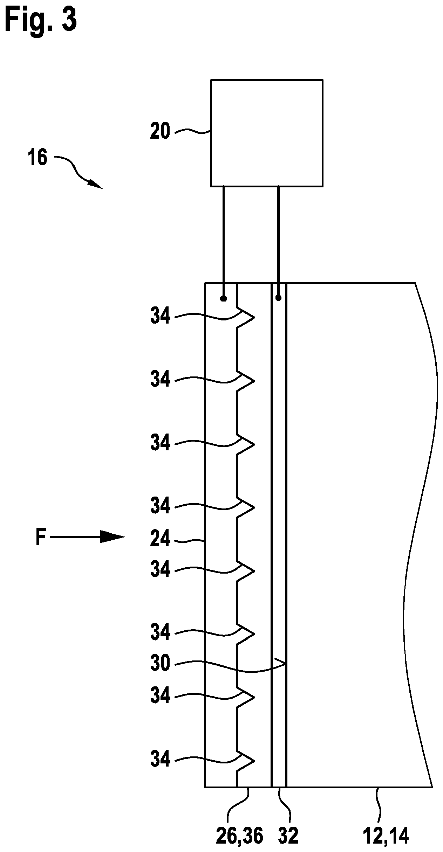

Figure 3 shows a third embodiment of the trigger device 18 together with the corresponding electric energy store unit 12. In this embodiment an extensive flat contact element 32 covers a relatively big area at the outer surface 30 of the unit 12 and a plurality of counter contact elements 34 are arranged in a corresponding area on the plate-like trigger element 24, wherein these counter contact elements 34 are electrically connected in parallel. Further on the trigger device 18 comprises only one deformable intermediate element 26, which element is formed/designed as a soft and deformable layer-like intermediate element 38 located between the extensive flat contact element 32 on the store unit's side and the arrangement of counter contact elements 34 on the trigger element's side. The counter contact elements 34 are formed as thorn-like or knife-like tools for penetrating the soft and deformable layer-like intermediate element 38 and contacting the contact element 32.

This gives the following function: a deformation, fracture and/or shift of the plate-like trigger element 24 caused by the force F of the external mechanical impact acting on said plate-like trigger element 24 establishes an electric contact between the contact element 32 and at least one of the counter contact elements 34. The monitoring circuitry 20 will detect the electrical contact or a circuit close caused by this contact, which will trigger the discharge of the electric energy store unit 12 by means of the discharge device 22.

Because all the counter contact elements 34 are electrically connected in parallel a contact between the contact element 32 and only one of the counter contact elements 34 is necessary for the trigger mechanism. Therefore the trigger device 18 reacts very quickly.

In an alternative embodiment (not shown), a plurality of contact elements 32 are arranged on a relatively big area at the outer surface 30 of the store unit 12 and an extensive flat counter contact element 34 covers a corresponding area on the plate-like trigger element 24, wherein the contact elements 32 are electrically connected in parallel. As with the embodiment shown in figure 3 the trigger device 18 comprises only one deformable intermediate element 26, which element is formed/designed as a soft and deformable layer-like intermediate element 38 located between the extensive flat counter contact element 34 on the trigger element's side and the arrangement of contact elements 32 on the store unit's side. In this embodiment the contact elements 32 are formed as thorn-like or knife-like tools for penetrating the soft and deformable layer-like intermediate element 38 and contacting the counter contact element 34.

## Claims

1. A safety apparatus (16) for protecting an electric energy store unit (12) comprising:
a trigger device (18) including:
- a plate-like trigger element (24) for covering at least a part of the outer surface (30) of the electric energy store unit (12);
- at least one contact element (32) for being mounted on the outer surface (30) of the electric energy store unit (12);
- at least one counter contact element (34) mounted between the plate-like trigger element (24) and the at least one contact element (32),
wherein the contact and counter contact elements (32, 34) are electrically interconnected in such way that a deformation and/or fracture and/or shift of the plate like trigger element (24) caused by a force F of an external mechanical impact acting on said plate like trigger element (24) will generate a trigger signal in form of a decreased resistance between the contact elements (32, 34) by establishing an electric contact between the contact element (32) and the counter contact element (34) or one of the contact elements (32) and one of the counter contact elements (34); and
- at least one deformable intermediate element (26) for mounting the plate-like trigger element (24) on the outer surface (30) of the electric energy store unit (12);
a monitoring circuitry (20) connected to the contact elements (32, 34) for monitoring the resistance between the contact elements (32, 34) of said trigger device (18); and
a safety device for taking safety measures concerning an electric energy store unit (12) in response to a trigger signal of the trigger device (18) monitored/detected by the monitoring circuitry (20),
wherein the deformable intermediate element (26) or at least one of the deformable intermediate elements (26) is a spring element (28) or a damping element (36), or comprises a spring element (28) and/or a damping element (36).

2. The safety apparatus (16) according to claim 1, **characterized in that** the deformable intermediate element (26) or at least one of the deformable intermediate elements (26) is a pressure spring or comprises a pressure spring.

3. The safety apparatus (16) according to claim 1 or 2, **characterized in that** the deformable intermediate element (26) or at least one of the deformable intermediate elements (26) is forming the counter contact element (34).

4. The safety apparatus (16) according to claim 3, **characterized in that** the deformable intermediate element (26) which is forming the counter contact element (34) reaches to the surface (30) of the electric energy store unit (12).

5. The safety apparatus (16) according to one of claims 1 to 4, **characterized in that** the safety device is a discharge device (22) to discharge the electric energy store unit (12).

6. An electric energy store device (10) comprising an electric energy store unit (12), and a safety apparatus (16) according to one of claims 1 to 5.

7. An electric energy store device (10) according to claim 6, **characterized in that** the electric energy store unit (12) is a battery unit (14).

8. The electric energy store device according to claim 6 or 7, **characterized in that** the unit (12, 14) is a Li-Ion battery unit with at least one Li-Ion battery element.

9. A method for taking safety measures of a safety device for protecting an electric energy store unit (12) by use of a safety apparatus (16) according to one of claims 1 to 5.

## Patentansprüche

1. Sicherheitsvorrichtung (16) zum Schützen einer Stromenergiespeichereinheit (12), umfassend:
eine Auslösereinrichtung (18), enthaltend:
- ein plattenartiges Auslöserelement (24) zum Bedecken mindestens eines Teils der Außenoberfläche (30) der Stromenergiespeichereinheit (12);
- mindestens ein Kontaktelement (32) zum Montiertwerden auf der Außenoberfläche (30) der Stromenergiespeichereinheit (12);
- mindestens ein Gegenkontaktelement (35), montiert zwischen dem plattenartigen Auslöserelement (24) und dem mindestens einen Kontaktelement (32),
wobei die Kontakt- und Gegenkontaktelemente (32, 34) derart elektrisch miteinander zusammengeschaltet sind, dass eine Verformung und/oder ein Bruch und/oder eine Verschiebung des plattenartigen Auslöserelements (24), durch eine Kraft F einer externen mechanischen Einwirkung verursacht, die auf das plattenartige Auslöserelement (24) wirkt, ein Auslösersignal generieren wird in Form eines verringerten Widerstands zwischen den Kontaktelementen (32, 34) durch Herstellen eines elektrischen Kontakts zwischen dem Kontaktelement (32) und dem Gegenkontaktelement (34) oder einem der Kontaktelemente (32) und einem der Gegenkontaktelemente (34); und
- mindestens ein verformbares Zwischenelement (26) zum Montieren des plattenartigen Auslöserelements (24) an der Außenoberfläche (30) der Stromenergiespeichereinheit (12);
eine Überwachungsschaltungsanordnung (20), die mit den Kontaktelementen (32, 34) verbunden ist zum Überwachen des Widerstands zwischen den Kontaktelementen (32, 34) der Aulösereinrichtung (18); und
eine Sicherheitseinrichtung zum Ergreifen von Sicherheitsmaßnahmen hinsichtlich einer Stromenergiespeichereinheit (12) als Reaktion auf ein Auslösersignal der Auslösereinrichtung (18), durch die Überwachungsschaltungsanordnung (20) überwacht/detektiert,
wobei das verformbare Zwischenelement (26) oder mindestens eines der verformbaren Zwischenelemente (26) ein Federelement (28) oder ein Dämpfungselement (36) ist oder ein Federelement (28) und/oder ein Dämpfungselement (36) umfasst.

2. Sicherheitsvorrichtung (16) nach Anspruch 1, **dadurch gekennzeichnet, dass** das verformbare Zwischenelement (26) oder mindestens eines der verformbaren Zwischenelemente (26) eine Druckfeder ist oder eine Druckfeder umfasst.

3. Sicherheitsvorrichtung (16) nach Anspruch 1 oder 2, **dadurch gekennzeichnet, dass** das verformbare Zwischenelement (26) oder mindestens eines der verformbaren Zwischenelemente (26) das Gegenkontaktelement (34) bildet.

4. Sicherheitsvorrichtung (16) nach Anspruch 3, **dadurch gekennzeichnet, dass** das verformbare Zwischenelement (26), das das Gegenkontaktelement (34) bildet, zu der Oberfläche (30) der Stromenergiespeichereinheit (12) reicht.

5. Sicherheitsvorrichtung (16) nach einem der Ansprüche 1 bis 4, **dadurch gekennzeichnet, dass** die Sicherheitseinrichtung eine Entladeeinrichtung (22) zum Entladen der Stromenergiespeichereinheit (12) ist.

6. Stromenergiespeichereinrichtung (10), umfassend eine Stromenergiespeichereinheit (12) und eine Sicherheitsvorrichtung (16) nach einem der Ansprüche 1 bis 5.

7. Stromenergiespeichereinrichtung (10) nach Anspruch 6, **dadurch gekennzeichnet, dass** die Stromenergiespeichereinheit (12) eine Batterieeinheit (14) ist.

8. Stromenergiespeichereinrichtung nach Anspruch 6 oder 7, **dadurch gekennzeichnet, dass** die Einheit (12, 14) eine Li-Ionen-Batterieeinheit mit mindestens einem Li-Ionen-Batterieelement ist.

9. Verfahren zum Ergreifen von Sicherheitsmaßnahmen einer Sicherheitseinrichtung zum Schützen einer Stromenergiespeichereinheit (12) durch Verwendung einer Sicherheitsvorrichtung (16) nach einem der Ansprüche 1 bis 5.

## Revendications

1. Appareil de sécurité (16) pour protéger une unité de stockage d'énergie électrique (12) comprenant :
un dispositif de déclenchement (18) incluant :
- un élément de déclenchement de type plaque (24) pour recouvrir au moins une partie de la surface extérieure (30) de l'unité de stockage d'énergie électrique (12) ;
- au moins un élément de contact (32) destiné à être monté sur la surface extérieure (30) de l'unité de stockage d'énergie électrique (12) ;
- au moins un élément de contre-contact (34) monté entre l'élément de déclenchement de type plaque (24) et l'au moins un élément de contact (32),
les éléments de contact et de contre-contact (32, 34) étant interconnectés électriquement de façon telle qu'une déformation et/ou une fracture et/ou un décalage de l'élément de déclenchement de type plaque (24) provoqués par une force F d'un impact mécanique externe agissant sur ledit élément de déclenchement de type plaque (24) génèrent un signal de déclenchement sous la forme d'une résistance réduite entre les éléments de contact (32, 34) en établissant un contact électrique entre l'élément de contact (32) et l'élément de contre-contact (34) ou un des éléments de contact (32) et un des éléments de contre-contact (34) ; et
- au moins un élément intermédiaire déformable (26) pour monter l'élément de déclenchement de type plaque (24) sur la surface extérieure (30) de l'unité de stockage d'énergie électrique (12) ;
un circuit de surveillance (20) connecté aux éléments de contact (32, 34) pour surveiller la résistance entre les éléments de contact (32, 34) dudit dispositif de déclenchement (18) ; et
un dispositif de sécurité pour prendre des mesures de sécurité concernant une unité de stockage d'énergie électrique (12) en réponse à un signal de déclenchement du dispositif de déclenchement (18) surveillé/détecté par le circuit de surveillance (20),
l'élément intermédiaire déformable (26) ou au moins un des éléments intermédiaires déformables (26) étant un élément ressort (28) ou un élément amortisseur (36), ou comprenant un élément ressort (28) et/ou un élément amortisseur (36).

2. Appareil de sécurité (16) selon la revendication 1, **caractérisé en ce que** l'élément intermédiaire déformable (26) ou au moins un des éléments intermédiaires déformables (26) est un ressort de pression ou comprend un ressort de pression.

3. Appareil de sécurité (16) selon la revendication 1 ou la revendication 2, **caractérisé en ce que** l'élément intermédiaire déformable (26) ou au moins un des éléments intermédiaires déformables (26) forme l'élément de contre-contact (34).

4. Appareil de sécurité (16) selon la revendication 3, **caractérisé en ce que** l'élément intermédiaire déformable (26) qui forme l'élément de contre-contact (34) atteint la surface (30) de l'unité de stockage d'énergie électrique (12).

5. Appareil de sécurité (16) selon l'une des revendications 1 à 4, **caractérisé en ce que** le dispositif de sécurité est un dispositif de décharge (22) pour décharger l'unité de stockage d'énergie électrique (12).

6. Dispositif de stockage d'énergie électrique (10) comprenant une unité de stockage d'énergie électrique (12), et un appareil de sécurité (16) selon l'une des revendications 1 à 5.

7. Dispositif de stockage d'énergie électrique (10) selon la revendication 6, **caractérisé en ce que** l'unité de stockage d'énergie électrique (12) est une unité de batterie (14).

8. Dispositif de stockage d'énergie électrique selon la revendication 6 ou la revendication 7, **caractérisé en ce que** l'unité (12, 14) est une unité de batterie Li-ion avec au moins un élément de batterie Li-ion.

9. Procédé pour prendre des mesures de sécurité d'un dispositif de sécurité pour protéger une unité de stockage d'énergie électrique (12) au moyen d'un appareil de sécurité (16) selon l'une des revendications 1 à 5.
